# EUROPEAN PATENT APPLICATION

(11) **EP 3 617 580 A1**
(43) Date of publication of application: **04.03.2020**
(21) Application number: 17861169.5
(22) Date of filing: 23.04.2018
(51) Int. Cl.: F21S 4/28

(54) **LIGHT SOURCE MODULE FASTENING STRUCTURE**

(30) Priority: 28.04.2017 KR 20170055170; 09.08.2017 KR 20170100811
(71) Applicant: Jeon, Byung Joon, Gyeongsan-si Gyeongsangbuk-do 38672 (KR)
(72) Inventor: Jeon, Byung Joon, Gyeongsan-si Gyeongsangbuk-do 38672 (KR)
(74) Representative: Jacobi, Markus Alexander
(86) International application number: PCT/KR2017/010336
(87) International publication number: WO 2018/199404

(57) **Abstract**

The present invention relates to a light source module coupling structure capable of coupling a light source module or a converter provided with a plate-type light-emitting light source such as a light-emitting diode (LED) and an organic light-emitting diode (OLED) to lighting by using magnetic force, and the light source module coupling structure includes: a metal lighting plate comprised of metal in lighting; a light source module having a plate-type light-emitting light source; a plurality of holes formed at the light source module or a converter; and a plurality of magnetic stators having one side thereof penetrating the holes so as to be attached to the metal lighting plate by means of magnetic force and having another side thereof suspending a perimeter of the holes so as to support the light source module or the converter, thereby coupling the light source module or the converter to the metal lighting plate.

## Description

### TECHNICAL FIELD

The present invention relates to a light source module coupling structure, and more particularly, to a light source module coupling structure capable of coupling a light source module or a converter provided with a plate-type light-emitting light source such as a light-emitting diode (LED) and an organic light-emitting diode (OLED) to lighting by using magnetic force.

### RELATED ART

A metal screw is used when a light source module provided with a plate-type light-emitting light source such as a LED and an OLED, for instance, as a surface light-emitting LED light-emitting part or other accessory circuit parts etc., is coupled to a metal lighting part (i.e. a plate consisting of metal in lighting). In this case, the metal screw penetrates holes formed at the light source module to be combined to a nut formed at the metal lighting part so as to couple the light source module to the metal lighting part. Meanwhile, it is easy for workers to combine a light source module to a metal lighting part and separate a light source module from a metal lighting part in factories where the workers may have comfortable posture during their work and the workers may use a variety of tools. However, products can be damaged and workers can be exposed to accidents because a light source module is directly detached from and attached to lighting on the ceiling or because the light source module needs to be disassembled in the state where the light source module is combined with lighting, when the light source module is replaced with a new one and the light source module (e.g. LED lighting and accessory circuit parts) needs to be separated from the lighting due to a product defect etc., once lighting is installed.

Korean Patent No. 10-1720994 (registered on March 23. 2017) discloses a surface attachment-type magnet coupling device for lighting. A coupling device for fixing parts inside lighting includes a head member which is connected to a case-type part inside lighting and fixes the case-type part in the lighting by using a magnetic substance, and an engagement member which extends from the head member and fixes a line-type part inside the lighting. The engagement member includes an engagement plate, which extends from one end of the head member, and a plurality of partitions, which are formed on one surface of the engagement plate, and the line-type part is inserted between the partitions to be fixed. According to the art, when the case-type part is replaced, only a base plate is detached without being separated from the ceiling. Because of this, working process may be simplified. The case-type part may be attached to the base plate by means of a magnetic combination. Accordingly, the user may easily replace the case-type part only by detaching the case-type part while spending less time replacing the case-type part. When scattered line-type parts are bound, the scattered line-type parts may be sorted out regardless of the position, length and thickness of the line-type parts.

Korean Patent No. 10-1699208 (registered on January 17. 2017) discloses lighting capable of improving convenience and heat dissipation. In terms of lighting applying a fluorescent lamp, when the fluorescent lamp is replaced with a LED, a printed circuit board is easily attached to and detached from a base plate because magnets are attached to the printed circuit board or the base plate. Further, the above described invention includes a plurality of printed circuit boards with LED elements mounted on them to separately supply power thereby controlling illumination and magnets to space the base plate and the printed circuit board thereby improving heat dissipation. The invention includes a base plate; a printed circuit plate with a light-emitting element mounted on it; and a fixing part for detachably fixing the printed circuit board to the base plate. The fixing part is attached to the base plate and includes a magnetic member fixed to the printed circuit member. The magnetic member is provided to protrude from the printed circuit board and spaces the entire printed circuit board from the base plate to create space for heat dissipation between the printed circuit board and the base plate. The printed circuit board consists of a first printed circuit board and a second printed circuit board and the printed circuit boards includes a plurality printed circuit boards, which are respectively provided with a light-emitting element, so as to create space and to be separately controlled, thereby improving heat dissipation. The second printed circuit board is positioned inside the first printed circuit board.

Conventional light source module coupling structures using magnets, as described above, have the disadvantage of limiting the space of a light source module due to complex coupling devices which include an engagement member including an engagement plate and a plurality of partitions etc., and a head member. Further, conventional light source module coupling structures have the disadvantage of forming and installing a fixing device (e.g. bolts and nuts, screws etc.) to fix a magnetic member to a printed circuit board.

### DETAILED DESCRIPTION OF THE INVENTION

### TECHNICAL PROBLEMS

As a means to solve the above-described problems, the present invention is directed to providing a light source module coupling structure capable of coupling a light source module or a converter provided with a plate-type light-emitting light source such as a LED and an OLED to lighting by using magnetic force.

### TECHNICAL SOLUTIONS

As a means to solve the above-described problems, according to a feature of the present invention, provided is a light source module coupling structure including a metal lighting plate consisting of metal in lighting; a light source module having a plate-type light-emitting light source; a plurality of holes formed at the light source module or a converter; and a plurality of magnetic stators having one side thereof, which penetrates the holes so as to be attached to the metal lighting plate by means of magnetic force, and another side thereof, which suspends a perimeter of the holes so as to support the light source module or the converter, thereby coupling the light source module or the converter to the metal lighting plate.

According to an embodiment of the present invention, the holes are formed at the corners or the center of the light source module, or formed at both sides of the converter.

According to an embodiment of the present invention, the magnetic stators includes a main body part; a magnetic part formed at one side of the main body part and penetrating the holes so as to attach the main body part to the metal lighting plate by means of magnetic force; an escape prevention part formed at another side of the main body part and suspending the perimeter of the holes so as to support the light source module; and a handle part formed at a lower portion of another side of the main body part so as to be gripped by the hand when the magnetic part is attached to or detached from the metal lighting plate.

In an embodiment, one escape prevention part is formed at another side of the main body part in one lateral direction or a plurality of escape prevention parts are formed at another side of the main body part in different lateral directions.

In an embodiment, the escape prevention part is integrally configured to protrude along an edge of another side of the main body part.

In an embodiment, the handle part is integrally configured to perpendicularly protrude from another side of the main body part.

In an embodiment, the magnetic stators are configured to protrude from an upper surface of one side of the main body part and further include a fixing part to fix the main body part to the metal lighting plate.

In an embodiment, the metal lighting plate has a fixing groove to insert and fix the fixing part.

In an embodiment, the fixing part is put into the fixing groove so as to be prevented from moving horizontally.

In an embodiment, the magnetic part has a through hole formed at the center of the magnetic part such that the fixing part may be configured to protrude from the upper surface of one side of the main body part.

According to an embodiment of the present invention, the magnetic stator includes a main body part; a magnetic part formed at one side of the main body part so as to attach the main body part to the metal lighting plate by means of magnetic force; an escape prevention part formed at another side of the main body part in one lateral direction and suspending a perimeter of the holes so as to support the converter; and a handle part formed at a lower portion of another side of the main body part so as to be gripped by the hand when the magnetic part is attached to or detached from the metal lighting plate.

In an embodiment, the escape prevention part has a stator configured to protrude from an upper surface of the escape prevention part so as to be fixed to the converter.

In an embodiment, the converter has fixing holes at both sides of the converter to insert and fix the stator.

In an embodiment, the fixing hole has one side thereof configured to be opened.

According to an embodiment of the present invention, the main body part has a through hole for inserting the magnetic part into one side of the handle part and fixing the magnetic part to one side of the handle part; and a coupling sill formed on an inner surface of the through hole so as to couple one side of the handle part.

In an embodiment, the magnetic part is configured to be inserted into and fixed to the through hole.

In an embodiment, the escape prevention part is integrally configured to protrude along an edge of an outer surface of the main body part.

In an embodiment, the escape prevention part has an elastic groove which consists of soft material and elastically supports the light source module when the escape prevention part suspends the perimeter of the hole.

In an embodiment, the handle part has one side thereof configured to be inserted into and fixed to the through hole, and the fixing part fixedly formed on an upper surface of one side of the handle part.

In an embodiment, the handle part has a coupling projection which is formed at a lateral side of one side of the handle part, is inserted into the through hole and rotates to be coupled to the coupling sill.

According to an embodiment of the present invention, the main body part has a through hole for inserting the magnetic part into one side of the handle part and fixing the magnetic part to one side of the handle part; and a combining hole formed at a lateral surface of the through hole so as to insert and combine one side of the handle part.

In an embodiment, the escape prevention parts may be configured to be fixed at the outer surface of the main body part to face each other in both directions.

In an embodiment, the handle part has a combining projection which is formed at a lateral surface of one side of the handle part to be inserted into and combined with the combining hole.

According to an embodiment of the present invention, the magnetic stators includes a main body part; a magnetic part formed at one side of the main body part and penetrating the holes so as to attach the main body part to the metal lighting plate by means of magnetic force; an insertion part having one side thereof formed at another side of the main body part and inserted into the holes so as to support the light source module; and a handle part formed at another side of the insertion part so as to be gripped by the hand when the magnetic part is attached to or detached from the metal lighting plate.

According to an embodiment of the present invention, the insertion part includes two insertion members having one side thereof integrally configured to extend from another side of the main body part and inserted into the holes so as to support the light source module; a plurality of insertion projections configured on an outer surface of the insertion member to be regularly spaced apart from each other, and inserted into an upper surface and lower surface of the hole so as to prevent the insertion members from escaping; and an elastic groove formed between the insertion members so as to provide elasticity to the insertion members.

In an embodiment, the handle part is integrally configured to extend from another side of the insertion members respectively.

According to an embodiment of the present invention, the magnetic stators includes a main body part; a magnetic part formed at one side of the main body part and penetrating the holes so as to attach the main body part to the metal lighting plate by means of magnetic force; an escape prevention part formed at another side of the main body part and suspending a perimeter the holes so as to support the light source module; a handle part formed at a lower portion of another side of the main body part so as to be gripped by the hand when the magnetic part is attached to or detached from the metal lighting plate; a fixing part configured to protrude from an upper surface of the handle part so as to fix the main body part to the metal lighting plate; and an elastic inversion part positioned between the magnetic part and the handle part so as to provide elasticity to the handle part or the fixing part.

According to an embodiment of the present invention, the main body part includes a through hole for inserting the magnetic part, one side of the handle part, the elastic inversion part; a magnet fixing sill formed on an inner surface of the through hole so as to fix the magnetic part; an inversion-part outer side stumbling sill for suspending an outer side the elastic inversion part; and a handle stumbling sill for suspending one side of the handle part so as to prevent one side of the handle part from escaping outwardly.

In an embodiment, the handle part has one side thereof inserted into the through hole and has the fixing part fixedly formed on the upper surface of one side of the handle part.

In an embodiment, the handle part has a stumbling projection formed on a lateral surface of one side of the handle part such that the stumbling projection stumbles over the handle stumbling sill.

In an embodiment, the fixing part has an inversion-part inner side stumbling sill which is configured to be regularly spaced apart from the upper surface of one side of the handle part so as to suspend an inner side of the elastic inversion part.

In an embodiment, the elastic inversion part allows an upper end of the fixing part to remain in the magnetic part by means weight in the event that the inner side of the elastic inversion part faces downwards, and the inner side of the elastic inversion part is overturned upwardly and provides elasticity to the fixing part in the event that the upper surface of one side of the handle part pushes the outer side of the elastic inversion part such that the upper end of the fixing part may protrude from the magnetic part.

In an embodiment, the elastic inversion part has a plurality of elastic members which have a through hole at the center of the plurality of elastic members and incline inwardly at a certain angle so as to provide elasticity.

In an embodiment, the elastic inversion part is configured to be a funnel-shaped spring.

In an embodiment, the main body part has the magnetic part put into and fixedly formed at one side of the main body part at a certain depth.

In an embodiment, the metal lighting plate has a fixing projection which is inserted into the upper surface of one side of the main body part and is fixed to the magnetic part.

In an embodiment, the escape prevention part has a plurality of escape prevention subsidiary projections which are configured to protrude from the upper surface of the escape prevention part and fixes the escape prevention part to the light source module.

In an embodiment, the hole has a plurality of fixing grooves which are formed outwardly to insert and fix the escape prevention subsidiary projections.

In an embodiment, a width of the fixing groove is greater than that of the escape prevention subsidiary projection such that the escape prevention subsidiary projection may rotate left and right when the magnetic stator separates.

In an embodiment, the escape prevention subsidiary projection is configured to have a round shape such that the escape prevention subsidiary projection may rotate to ride on the upper surface of the fixing groove when the magnetic stator separates.

### ADVANTAGEOUS EFFECTS

The present invention is directed to providing a light source module coupling structure capable of coupling a light source module or a converter provided with a plate-type light-emitting light source such as a LED and an OLED to lighting by using magnetic force. According to the present invention, there are no space limitations on a light source module or a converter because the present invention uses a magnetic stator with a simple shape. Further, a fixing device (e.g. a bolt and a nut, a screw etc.) for fixing a magnetic member is not needed and as a result, any step of installing a fixing device is not needed.

According to the present invention, a separate magnetic stator is used to easily attach a light source module or a converter to lighting and detach a light source module or a converter from lighting, thereby leading to a reduction in the amount of time spent installing and replacing a light source module or a converter. Accordingly, efficiency in replacing a light source module or a converter of lighting with new ones is enhanced and the problem of escape with conventional products is solved.

### BRIEF DESCRIPTION OF THE DRAWINGS

FIG. 1 is a view illustrating a light source module coupling structure according to the embodiment of the present invention.
FIGS. 2 to 4 are views illustrating the magnetic stator in FIG. 1 as the first example.
FIG. 5 is a view illustrating the magnetic stator in FIG. 1 as the second example.
FIGS. 6 to 7 are views illustrating the magnetic stator in FIG. 1 as the third example.
FIG. 8 is a view illustrating the magnetic stator in FIG. 1 as the fourth example.
FIG. 9 is a view illustrating the magnetic stator in FIG. 1 as the fifth example.
FIG. 10 is a view illustrating the magnetic stator in FIG. 1 as the sixth example.
FIG. 11 is a view illustrating the magnetic stator in FIG. 1 as the seventh example.
FIG. 12 is a view illustrating the elastic inversion part in FIG. 11.
FIG. 13 is a view illustrating the magnetic stator in FIG. 1 as the eighth example.
FIG. 14 is a view illustrating the elastic inversion part in FIG. 13.
FIG. 15 is a view illustrating the magnetic stator in FIG. 1 as the ninth example.
FIG. 16 is a view illustrating the magnetic stator in FIG. 1 as the tenth example.

### MODE FOR CARRYING OUT THE INVNETION

Below, embodiments of the present invention will be described in detail with reference to the accompanying drawings such that those skilled in the art to which the present invention pertains can easily embody the present invention. However, the embodiments are provided as examples only to describe the structure and function of the invention. Accordingly, the scope of protection of the present invention should not be limited to the embodiments set forth herein. That is, it should be understood that since the invention may be modified in various ways and embodied in various different forms, the embodiments are intended to cover various modifications and equivalents thereof within the spirit and scope of the present invention. Further, it should be further understood that the embodiments do not mean including all the purposes or effects presented in the present invention or including only the purposes or effects presented in the present invention. Therefore, the scope of the present invention should not be construed as being limited to the embodiments set forth herein.

The terms used in this specification should be understood as follows.

It should be understood that the terms "first", "second" etc., are used herein only to distinguish one element from another element. Thus, the scope of the invention should not be limited by the terms. For instance, a first element may be referred to as a second element, and similarly, a second element may be referred to as a first element. It should be understood that when an element is "connected" to another element, it means that one element may be "directly connected" to another element and that a third element may exist between one element and another element. On the contrary, it should be understood that when one element is directly connected to another element, it means that no other element exists between one element and another element. Likewise, other expressions used to describe the relations among elements such as "between" and "right between" or "adjacent to" and "directly adjacent to" should be interpreted.

The singular forms "a", "an" and "the" are intended to include the plural forms as well, unless explicitly indicated otherwise. It will be further understood that the terms "comprise" or "have," when used in this specification, specify the presence of stated features, integers, steps, operations, elements, components or combinations thereof but do not preclude the presence or addition of one or more other features, integers, steps, operations, elements, components or combinations thereof.

Unless otherwise defined, all the terms used herein have the same meaning as commonly understood by one skilled in the art to which the present invention pertains. It will be further understood that terms such as those defined in commonly used dictionaries should be interpreted as having a meaning that is consistent with their meaning in the context of the relevant art and should not be interpreted in an idealized or overly formal sense unless explicitly so defined herein.

Below, a light source module coupling structure according to the embodiment of the present invention will be described in detail by referring to the drawings.

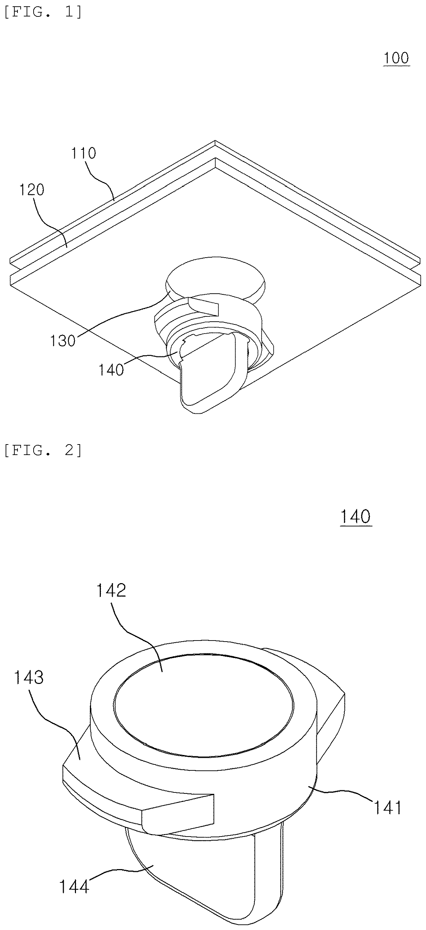

FIG. 1 is a view illustrating a light source module coupling structure according to the embodiments of the present invention.

By referring to FIG.1, a light source module coupling structure 100 includes a metal lighting plate 110, a light source module 120, a plurality of holes 130, and a plurality of magnetic stators 140. Herein, FIG. 1 is a view illustrating a light source module 120 as a fixture.

The metal lighting plate 110, to which one side of the magnetic stator 140 is attached by means of magnetic force, is a plate consisting of metal in lighting.

The light source module 120 has a plate-type light-emitting light source such as an LED, an OLED etc. and also, includes a surface light-emitting LED light-emitting part or other accessory circuit parts. Further, the light source module 120 has a plurality of holes 130 and is supported by another side of the magnetic stator 140.

The hole 130 is formed at the light source module 120 so as to get one side of the magnetic stator 140 through the hole.

In an embodiment, the hole 130 may be formed at each corner of the light source module 120 and also, may be formed at the center of the light source module 120.

At the same time as one side of the magnetic stator 140 penetrates the hole 130 and is attached to the metal lighting plate 110 by means of magnetic force, another side of the magnetic stator 140 suspends a perimeter of the hole 130 to support the light source module 120, thereby coupling the light source module 120 to the metal lighting plate 110.

A light source module coupling structure 100 with the above-described configuration is capable of coupling a light source module or a converter provided with a plate-type light-emitting light source such as an LED and an OLED to lighting by using magnetic force. Accordingly, there are no space limitations on a light source module or a converter because the present invention uses a magnetic stator with a simple shape. Further, a fixing device (e.g. a bolt and a nut, a screw etc.) for fixing a magnetic member is not needed and as a result, any step of installing a fixing device is not needed. Herein, a converter also has holes on both sides of the converter such that one side of the converter penetrates the relevant hole to be attached to the metal lighting plate 110, and at the same time, another side of the converter is coupled to the metal lighting plate 110 by the magnetic stator 140 which supports the converter by suspending a perimeter of the relevant hole.

A light source module coupling structure 100 with the above-described configuration uses a separate magnetic stator 140 to easily attach a light source module 120 or a converter to lighting and detach a light source module or a converter from lighting, thereby resulting in a reduction in the amount of time spent installing and replacing a light source module or a converter. Accordingly, efficiency in replacing a light source module 120 or a converter of lighting with new ones is enhanced and the problem of escape with conventional products is solved.

The amount of time spent on work done with a light source module coupling structure 100 with the above-described configuration is less than the amount of time spent on work done with conventional combination coupling stuructures using metal screws or bolts/nuts. Further, may be prevented various accidents that might take place due to the user's uncomfortable posture while the user couples a light source module to lighting and replaces a light source module with a new one according to a light source module coupling structure 100 with the above-described configuration.

FIGS. 2 to 4 are views illustrating the magnetic stator in FIG. 1 as the first example.

By referring to FIG.S 2 to 4, the magnetic stator 140 includes a main body part 141, a magnetic part 142, an escape prevention part 143 and a handle part 144.

The main body part 141 has the magnetic part 142 fixedly formed at one side of the main body part 141, the escape prevention part 143 fixedly formed at another side of the main body part 141, and the handle part 144 fixedly formed at a lower portion of another side of the main body part 141.

The magnetic part 142 is fixedly formed at one side of the main body part 141 and penetrates the hole 130 so as to attach the main body part 141 to the metal lighting plate 110 by means of magnetic force.

The escape prevention part 143 is fixedly formed at another side of the main body part 141 and suspends a perimeter of the hole 130 so as to support the light source module 120.

In an embodiment, as an escape prevention guide of a fixture (i.e. the light source module 120), one escape prevention part 143 may be formed at another side of the main body part 141 in one lateral direction, or a plurality of escape prevention parts may be formed in different lateral directions, so as to prevent the fixture (i.e. the light source module 120) from escaping perpendicularly.

In an embodiment, two escape prevention parts 143 may be formed and as illustrated in FIG. 2, may be fixedly formed respectively at another side of the main body part 141 to face each other in both directions.

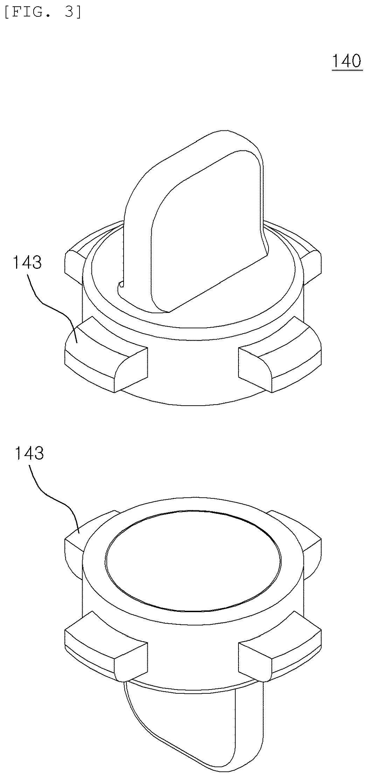

In an embodiment, four escape prevention parts 143 may be formed and as illustrated in FIG. 3, may be fixedly formed respectively at another side of the main body part 141 to face each other in four directions.

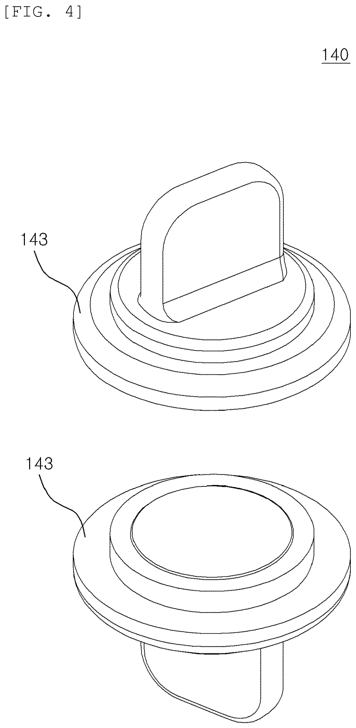

In an embodiment, as illustrated in FIG. 4, the escape prevention part 143 may be integrally configured to protrude along an edge of another side of the main body part 141.

The handle part 144 is fixedly formed at a lower portion of another side of the main body part 141 so as to be gripped by the hand when the light source module 120 (i.e. the magnetic part 142) is coupled to (that is, when the light source module 120 is attached to) or detached from the metal lighting plate 110 (that is, when the main body part 141 is inserted into and removed from the hole 130).

In an embodiment, the handle part 144 may be integrally configured to perpendicularly protrude from another side of the main body part 141.

In an embodiment, the handle part 144 may be gripped by the hand such that the magnetic part 142 may penetrate the hole 130 and may be easily attached to the metal lighting plate 110 when the light source module 120 is coupled to the metal lighting plate 110. Further, the handle part 144 may be gripped by the hand such that the magnetic part 142 may be easily detached from the metal lighting plate 110 when the light source module 120 separates from the metal lighting plate 110.

In terms of a magnetic stator 140 with the above-described configuration, particularly, the main body part 141 is provided with the handle part 144 such that lighting and a light source module 120 or a converter are easily attached and detached or separated at the time when lighting and a light source module 120 or a converter are installed again.

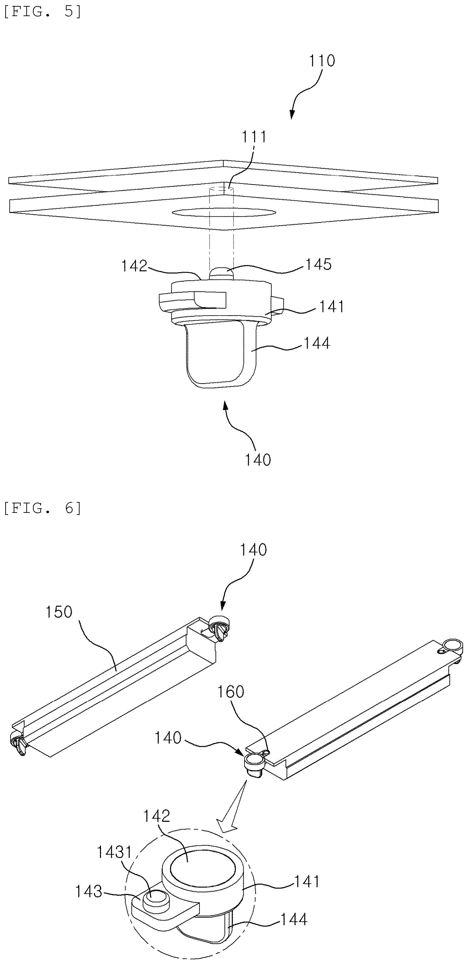

FIG. 5 is a view illustrating the magnetic stator in FIG. 1 as the second example.

By referring to FIG. 5, the magnetic stator 140 includes a main body part 141, a magnetic part 142, an escape prevention part 143, a handle part 144, and a fixing part 145. Herein, the difference will be described because the main body part 141, the magnetic part 142, the escape prevention part 143, and the handle part 144 in FIG. 5 are similar to those in FIG. 2.

The magnetic part 142 has a through hole at the center of the magnetic part such that the fixing part 145 may be configured to protrude from an upper surface of one side of the main body part 141.

The fixing part 145 is configured to protrude from the upper surface of one side of the main body part 141 and is inserted into a fixing groove 111 formed at the metal lighting plate 110 so as to fix the main body part 141 to the metal lighting plate 110. In this case, the metal lighting plate 110 has the fixing groove 111 (i.e. a movement prevention hole) to insert and fix the fixing part 145.

In an embodiment, the fixing part 145, as an escape prevention guide (i.e. a horizontal escape prevention member) of a fixture (i.e. the light source module 120), is put into the fixing groove 111 formed at the metal lighting plate 110 so as to be prevented from moving horizontally, thereby preventing the fixture (i.e. the light source module 120) from escaping horizontally.

A magnetic stator 140 with the above-described configuration is first inserted into the hole 130 formed at the light source module 120 and is attached to the metal lighting plate 110 by using magnetic force such that the light source module 120 may be attached to lighting (i.e. the metal lighting plate 110) attached on the ceiling. In this case, the fixing part 145 put into the through hole of the magnetic part 142 is inserted into the fixing groove 111 formed at the metal lighting plate 110 so as to be fixed to the metal lighting plate 110.

A magnetic stator 140 with the above-described configuration is capable of easily coupling a light source module 120 or a converter to lighting by applying the magnetic part 142, the escape prevention part 143, the handle part 144, the fixing part 145 etc. to the main body part 141, thereby reducing the amount of time spent coupling a light source module 120 or a converter to lighting and replacing the light source module 120 or the converter with a new one. Accordingly, efficiency in replacing a light source module or a converter of lighting with new ones is enhanced and the problem of escape with conventional products is solved. Further, the present invention prevents products with magnets attached to them from moving even when the products are affected by an external shock thereby putting the products in place.

FIGS. 6 to 7 are views illustrating the magnetic stator in FIG. 1 as the third example.

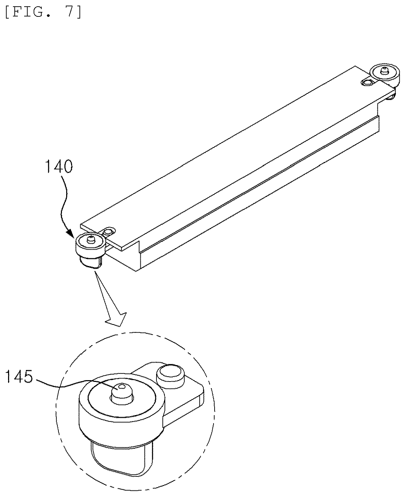

By referring to FIGS. 6 and 7, the magnetic stator 140 includes a main body part 141, a magnetic part 142, an escape prevention part 143, and a handle part 144. Herein, FIGS. 6 and 7 illustrates a case in which the fixture is a converter 150, and the difference will be described because the main body part 141, the magnetic part 142, the escape prevention part 143, and the handle part 144 in FIGS. 6 and 7 are similar to those in FIG. 2.

The magnetic part 142 attaches the main body part 141 to the metal lighting plate 110 by means of magnetic force.

The escape prevention part 143 suspends both side of the converter 150 to support the converter 150 for converting alternating current to direct current which is provided to the light source module 120.

In an embodiment, one escape prevention part 143 may be formed at another side of the main body part 141 in one lateral direction.

In an embodiment, the escape prevention part 143 may have a stator 1431.

The stator 1431 is configured to protrude from an upper surface of the escape prevention part 143 and is inserted into a hole 160 formed at the converter 150 so as to fix the escape prevention part 143 to the converter 150. In this case, the escape prevention part 143 may support the converter 150 by suspending a perimeter of the hole 160 formed at the converter 150. Further, the converter 150 has fixing holes 160 (i.e. a movement prevention hole) formed at both sides of the converter 150 to insert and fix the stator 1431, and the fixing hole 160 may have one side thereof configured to be opened.

The handle part 144 may be gripped by the hand when the converter 150 is coupled to or separated from the metal lighting plate 110.

In an embodiment, the handle part 144 may be gripped by the hand when the converter 150 is coupled to the metal lighting plate 110 such that the magnetic part 142 may be easily attached to the metal lighting plate 110 and the handle part 144 may be gripped by the hand when the converter 150 is separated from the metal lighting plate 110 such that the magnetic part 142 may be easily detached from the metal lighting plate 110.

As illustrated in FIG. 7, a magnetic stator 140 with the above-described configuration may further include a fixing part 145. Herein, the fixing part 145 will not be described because the fixing part 145 is similar to that in FIG. 5.

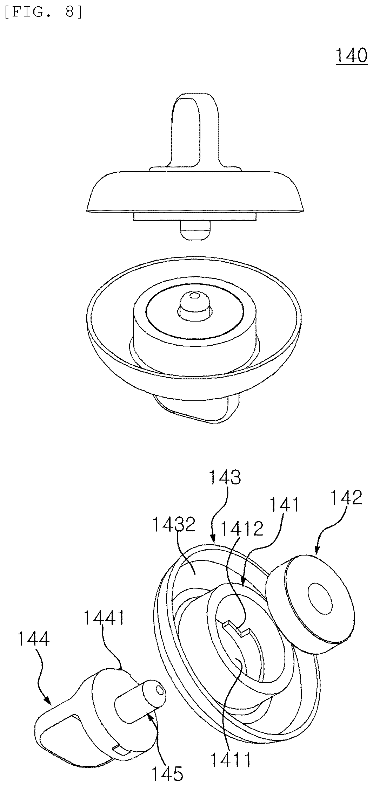

FIG. 8 is a view illustrating the magnetic stator in FIG. 1 as the fourth example.

By referring to FIG. 8, the magnetic stator 140 includes a main body part 141, a magnetic part 142, an escape prevention part 143, a handle part 144, and a fixing part 145. Herein, the difference will be described because the main body part 141, the magnetic part 142, the escape prevention part 143, and the handle part 144 in FIG. 8 are similar to those in FIG.2, and the fixing part 145 in FIG. 8 is similar to that in FIG. 5.

The main body part 141 has a through hole 1411 to insert the magnetic part 142 into one side of the handle part 144 and fix the magnetic part 142 to one side of the handle part 144 and has a coupling sill 1412 formed on an inner surface of the through hole 1411 so as to couple one side (i.e. a coupling projection 1441) of the handle part 144.

The magnetic part 142 is configured to be inserted and fixed to the through hole 1411 of the main body part 141.

The escape prevention part 143 is fixedly formed on an outer surface of the main body part 141 and suspends a perimeter of the hole 130 formed at the light source module 120 so as to support the light source module 120.

In an embodiment, the escape prevention part 143 may be integrally configured to protrude along an edge of the outer surface of the main body part 141.

In an embodiment, the escape prevention part 143 may have an elastic groove 1432 which consists of soft material and elastically supports the light source module 120 when the escape prevention part 143 suspends the perimeter of the hole 130 formed at the light source module 120. Accordingly, the metal lighting plate 110 and the light source module 120 may be tightly combined to each other by means of elasticity.

The handle part 144 has one side thereof configured to be inserted and fixed to the through hole 1411 of the main body part 141, and the fixing part 145 fixedly formed on an upper surface of one side of the handle part 144.

In an embodiment, the handle part 144 may have a coupling projection 1441 which consists of hard material, is formed at a lateral side of one side of the handle part 144, is inserted into the through hole 1441 of the main body part 141 and rotates to be coupled to a coupling sill 1412 of the main body part 141.

The fixing part 145 is configured to protrude from the upper surface of one side of the handle part 144.

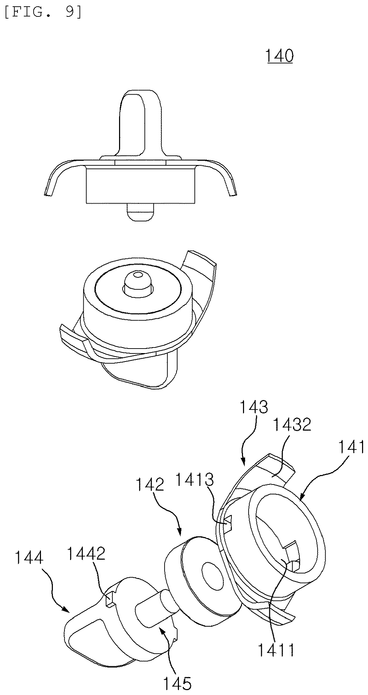

FIG. 9 is a view illustrating the magnetic stator in FIG. 1 as the fifth example.

By referring to FIG. 9, the magnetic stator 140 includes a main body part 141, a magnetic part 142, an escape prevention part 143, a handle part 144, and a fixing part 145. Herein, the difference will be described because the main body part 141, the magnetic part 142, the escape prevention part 143, the handle part 144 in FIG. 9 are similar to those in FIG.2 and the fixing part 145 in FIG. 9 is similar to that in FIG. 5.

The main body part 141 has a through hole 1411 to insert one side of the handle part 144 into the magnetic part 142 and fixing one side of the handle part 144 to the magnetic part 142 and has a combining hole 1413 formed on a lateral side of the through hole 1411 to insert and combine one side (i.e. a combining projection 1442) of the handle part 144.

The magnetic part 142 is configured to be inserted into and fixed to the through hole 1411 of the main body part 141.

The escape prevention part 143 is fixedly formed on an outer surface of the main body part 141 and suspends a perimeter of the hole 130 formed at the light source module 120 so as to support the light source module 120.

In an embodiment, the escape prevention parts 143 may be fixedly formed respectively on an outer surface of the main body part 141 to face each other.

In an embodiment, the escape prevention part 143 may have an elastic groove 1432 which consists of soft material and elastically supports the light source module 120 when the escape prevention part 143 suspends the perimeter of the hole 130 formed at the light source module 120. Accordingly, the metal lighting plate 110 and the light source module 120 may be tightly combined to each other by means of elasticity.

The handle part 144 has one side thereof configured to be inserted and fixed to the through hole 1411 of the main body part 141 and has the fixing part 145 fixedly formed on an upper surface of one side of the handle part 144.

In an embodiment, the handle part 144 may have the combining projection 1442 which consists of hard material and is formed at a lateral surface of one side of the handle part 144 so as to be inserted into and combined to the combining hole 1413 of the main body part 141.

The fixing part 145 is configured to protrude from the upper surface of one side of the handle part 144.

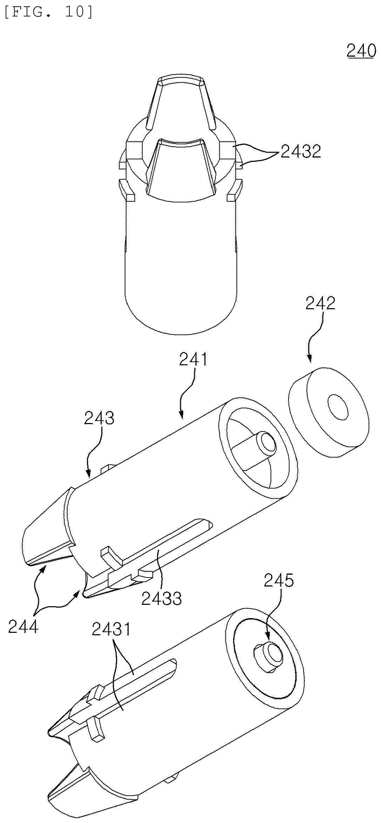

FIG. 10 is a view illustrating the magnetic stator in FIG. 1 as the sixth example.

By referring to FIG. 10, the magnetic stator 240 includes a main body part 241, a magnetic part 242, an insertion part 243, and a handle part 244.

The main body part 241 has the magnetic part 242 fixedly formed at one side of the main body part 241 and has an insertion part 243 fixedly formed at another side of the main body part 241.

The magnetic part 242 is fixedly formed at one side of the main body part 241 and penetrates the hole 130 so as to attach the main body part 241 to the metal lighting plate 110 by means of magnetic force.

The insertion part 243 has one side thereof fixedly formed at another side of the main body part 241 and another side thereof fixedly formed at the handle part 244 so as to be inserted into the hole 130, thereby supporting the light source module 120.

In an embodiment, the insertion part 243 may include two insertion members 2431 and a plurality of insertion projections 2432 and an elastic groove 2433.

The insertion member 2431 has one side thereof integrally configured to extend from another side of the main body part 241 and has another side thereof integrally configured to extend from the handle part 244 so as to be inserted into the hole 130 and to support the light source module 120.

The insertion projections 2432 are formed on outer surfaces of the insertion members 2431 to be regularly spaced apart from each other and are inserted into an upper surface and lower surface of the hole 130 so as to prevent the insertion members 2431 from escaping.

The elastic groove 2433 is formed between the insertion members 2431 so as to provide elasticity to the insertion members 2431.

In an embodiment, the elastic groove 2433 is tightened by the handle part 244 when the insertion part 243 (i.e. the insertion member 2431) is inserted into or separated from the hole 130, and in the state in which the insertion member 2431 is inserted into the hole 130, the elastic groove 2433 provides elasticity to the insertion member 2431 such that the insertion member 2431 may fit tightly into the hole 130.

The handle part 244 is fixedly formed at another side of the insertion part 243 so as to be gripped by the hand when the light source module 120 is coupled to or separated from the metal lighting plate 110 (that is, when the insertion part 243 is inserted into and separated from the hole 130).

In an embodiment, the handle parts 244 may be respectively configured to integrally extend from another side of the insertion members 2431.

In an embodiment, both ends of the handle part 244 may be pressed to narrow the gap (i.e. the elastic groove 2433) between the insertion members 2431 when the insertion part 243 (i.e. the insertion member 2431) is inserted into and separated from the hole 130.

The magnetic stator 240 with the above-described configuration may further include a fixing part 245. Herein, the fixing part 245 will not be described because the fixing part 245 in FIG. 10 is similar to the fixing part 245 in FIG. 5.

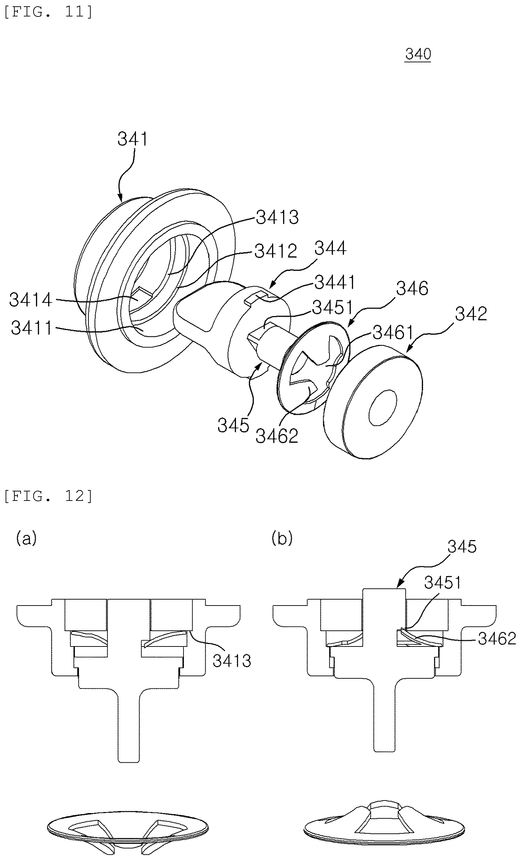

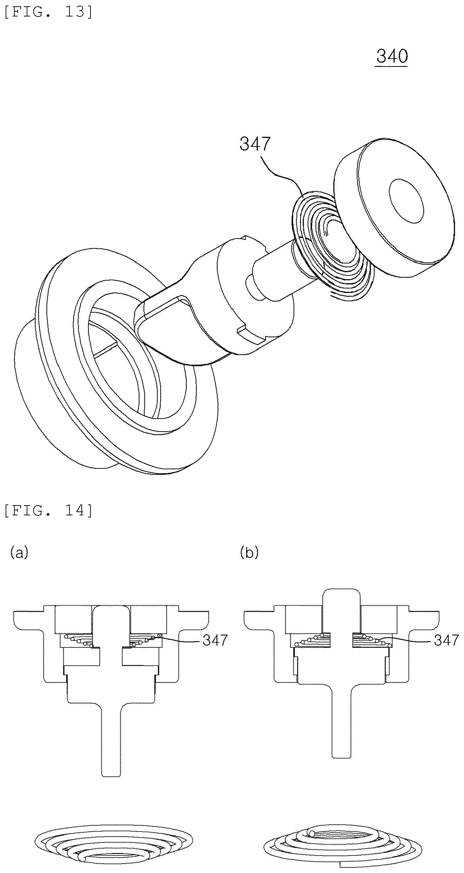

FIG. 11 is a view illustrating the magnetic stator in FIG. 1 as the seventh example, FIG. 12 is a view illustrating the elastic inversion part in FIG. 11, FIG. 13 is a view illustrating the magnetic stator in FIG. 1 as the eighth example, and FIG. 14 is a view illustrating the elastic inversion part in FIG. 13.

By referring to FIGS. 11 to 14, the magnetic stator 340 includes a main body part 341, a magnetic part 342, an escape prevention part 343, a handle part 344, a fixing part 345, and an elastic inversion part 346. Herein, the difference will be described because the main body part 341, the magnetic part 342, the escape prevention part 343, and the handle part 344 in FIGS. 11 to 14 are similar to the main body part 141, the magnetic part 142, the escape prevention part 143, and the handle part 144 in FIG.2, and the fixing part 345 in FIGS. 11 to 14 is similar to the fixing part 145 in FIG. 5.

The main body part 341 has a through hole 3411 to insert the magnetic part 342, one side of the handle part 344 and the elastic inversion part 346. Further, the main body part 341 has a magnet fixing sill 3412 which is formed on an inner surface of the through hole 3411 and fixes the magnetic part 342, an inversion-part outer side stumbling sill 3413 which suspends an outer side of the elastic inversion part 346, and a handle stumbling sill 3414 which suspends one side of the handle part 344 so as to prevent one side of the handle part 344 from escaping outwardly.

The magnetic part 342 is configured to be inserted into the through hole 3411 of the main body part 341 and to be fixed to the magnet fixing sill 3412 of the main body part 341.

The escape prevention part 343 is fixedly formed on an outer surface of the main body part 341 and suspends a perimeter of the hole 130 formed at the light source module 120 so as to support the light source module 120.

In an embodiment, the escape prevention part 343 may be integrally configured to protrude along an edge of the outer surface of the main body part 341.

The handle part 344 has one side thereof configured to be inserted into the through hole 3411 of the main body part 341 and has the fixing part 345 configured to be fixed on an upper surface of one side of the handle part 344.

In an embodiment, the handle part 344 may have a stumbling projection 3441 which is formed at a lateral surface of one side of the handle part 344 so as to stumble over the handle stumbling sill 3414 of the main body part 341.

The fixing part 345 is configured to protrude from the upper surface of one side of the handle part 344.

In an embodiment, the fixing part 345 has an inversion-part inner side stumbling sill 3451 which is configured to be regularly spaced apart from the upper surface of one side of the handle part 344 for and suspends an inner side of the elastic inversion part 346.

The elastic inversion part 346 is positioned between the magnetic part 342 and one side of the handle part 344 and provides elasticity to one side of the handle part 344 or the fixing part 345.

In an embodiment, the elastic inversion part 346 may have an outer side thereof configured to stumble over the inversion-part outer side stumbling sill 3413 of the main body part 341 and may have an inner side (i.e. an elastic member 3462) thereof configured to stumble over an inversion-part inner side stumbling sill 3451 of the fixing part 345.

In an embodiment, as illustrated in FIG. 12, the elastic inversion part 346 allows the upper end of the fixing part 345 to remain in the magnetic part 242 by means weight in the event that the inner side (i.e. the elastic member 3462) of the elastic inversion part faces downwards, and the inner side (i.e. the elastic member 3462) of the elastic inversion part is overturned upwardly and provides elasticity to the inversion-part stumbling sill 3451 of the fixing part 345 such that the upper end of the fixing part 345 may protrude from the magnetic part 242, in the event that an upper surface of one side of the handle part 344 pushes the outer side of the elastic inversion part.

In an embodiment, as illustrated in FIG. 11, the elastic inversion part 346 has a plurality of elastic members 3462 which have a through hole 3461 at the center of the plurality of elastic members and incline inwardly at a certain angle so as to provide elasticity.

In an embodiment, as illustrated in FIGS. 13 and 14, the elastic inversion part 346 may be configured to be a funnel-shaped spring 347. Herein, the spring 347 will not be described because the spring 347 is similar to the above-described elastic inversion part 346.

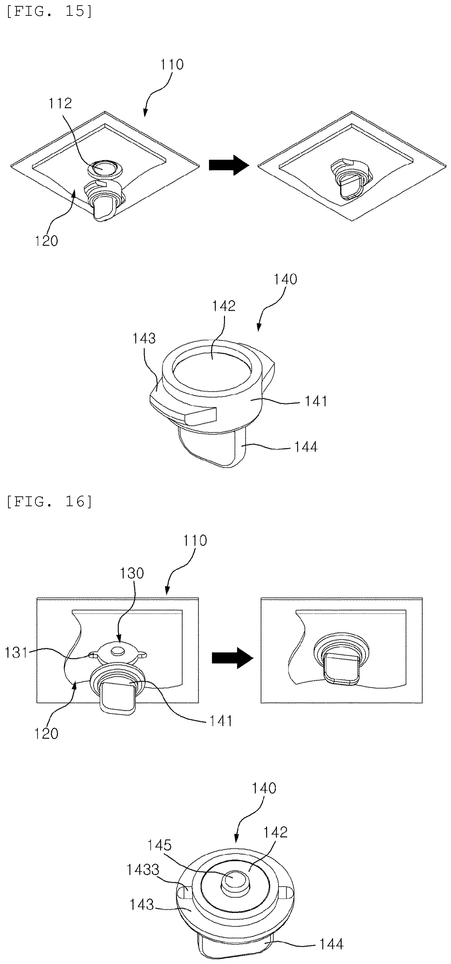

FIG. 15 is a view illustrating the magnetic stator in FIG. 1 as the ninth example.

By referring to FIG. 15, the magnetic stator 140 includes a main body part 141, a magnetic part 142, an escape prevention part 143, and a handle part 144. Herein, only the difference will be described because the main body part 141, the magnetic part 142, the escape prevention part 143, and the handle part 144 in FIG. 15 are similar to those in FIG.2.

The main body part 141 has the magnetic part 142 which is put into and fixedly formed at one side of the main body part 141 at a certain depth.

The magnetic part 142 has an upper surface thereof configured to be put into one side of the main body part 141 at a certain depth. In this case, the metal lighting plate 110 has a fixing projection 112 (i.e. a movement prevention projection) which is inserted into the upper surface of one side of the main body part 141 and is fixed to the magnetic part 142. Herein, the fixing projection 112, as an escape prevention guide (i.e. a horizontal escape prevention member) of a fixture (i.e. the light source module 120), is put into one side of the main body part 141 so as to be prevented from moving horizontally, thereby preventing the fixture (i.e. the light source module 120) from escaping horizontally.

FIG. 16 is a view illustrating the magnetic stator in FIG. 1 as the tenth example.

By referring to FIG. 16, the magnetic stator 140 includes a main body part 141, a magnetic part 142, an escape prevention part 143, a handle part 144, and a fixing part 145. Herein, only the difference will be described because the main body part 141, the magnetic part 142, the escape prevention part 143, and the handle part 144 in FIG. 16 are similar to those in FIG.2, and the fixing part 145 in FIG. 16 is similar to that in FIG. 5.

The escape prevention part 143 has a plurality of escape prevention subsidiary projections 1433.

The escape prevention subsidiary projection 1433 is configured to protrude from an upper surface of the escape prevention part 143 and is inserted into the fixing groove 131 of the hole 130 formed at the light source module 120 and fixes the escape prevention part 143 to the light source module 120. In this case, the hole 130 formed at the light source module 120 has a plurality of fixing grooves 131 which are formed outwardly to insert and fix the escape prevention subsidiary projection 1433. Further, the width of the fixing groove 131 may be configured to be greater than that of the escape prevention subsidiary projection 1433 such that the escape prevention subsidiary projection 1433 may rotate left and right when the magnetic stator 140 separates.

In an embodiment, the escape prevention subsidiary projection 1433 is configured to have a round shape such that the escape prevention subsidiary projection 1433 may slightly rotate to ride on the upper surface of the fixing groove 131 when the magnetic stator 140 separates.

The embodiment of the present invention may be embodied not only through the above-described devices and/or operation methods but also through programs for embodying functions corresponding to the configuration of the embodiment of the present invention, recording media in which the programs are recorded. Such an embodiment may be readily implemented by those skilled in the art to which the present invention pertains on the basis of the description of the embodiment that has been given above. The invention has been described in relation to its preferred embodiment. However, the scope of the present invention should not be construed as being limited to the embodiment set forth herein. Any changes and modifications made on the basis of the technical ideas of the present invention defined in the appended claims should be construed as being included in the scope of the present invention.

## Claims

1. A light source module coupling structure, comprising:
a metal lighting plate comprised of metal in lighting;
a light source module having a plate-type light-emitting light source ;
a plurality of holes formed at the light source module or a converter; and
a plurality of magnetic stators having one side thereof penetrating the holes so as to be attached to the metal lighting plate by means of magnetic force and having another side thereof suspending a perimeter of the holes so as to support the light source module or the converter, thereby coupling the light source module or the converter to the metal lighting plate.

2. The light source module coupling structure according to claim 1,
wherein the holes are formed at corners or the center of the light source module or formed at both sides of the converter.

3. The light source module coupling structure according to claim 1,
the magnetic stators comprising:
a main body part;
a magnetic part formed at one side of the main body part and penetrating the holes so as to attach the main body part to the metal lighting plate by means of magnetic force;
an escape prevention part formed at another side of the main body part and suspending a perimeter of the holes so as to support the light source module; and
a handle part formed at a lower portion of another side of the main body part so as to be gripped by the hand when the magnetic part is attached to or detached from the metal lighting plate.

4. The light source module coupling structure according to claim 3,
the magnetic stator, further comprising:
a fixing part configured to protrude from an upper portion of one side of the main body part so as to fix the main body part to a fixing groove provided to the metal lighting plate.

5. The light source module coupling structure according to claim 3,
the main body part comprising:
a through hole for inserting the magnetic part into one side of the handle part and fixing the magnetic part to one side of the handle part; and
a coupling sill formed on an inner surface of the through hole so as to couple one side of the handle part.

6. The light source module coupling structure according to claim 1,
the magnetic stators comprising:
a main body part;
a magnetic part formed at one side of the main body part so as to attach the main body part to the metal lighting plate by means of magnetic force;
an escape prevention part formed at another side of the main body part in one lateral direction and suspending a perimeter of the holes so as to support the converter; and
a handle part formed at a lower portion of another side of the main body part so as to be gripped by the hand when the magnetic part is attached to or detached from the metal lighting plate.

7. The light source module coupling structure according to claim 1,
the magnetic stators comprising:
a main body part;
a magnetic part formed at one side of the main body part and penetrating the holes so as to attach the main body part to the metal lighting plate by means of magnetic force;
an insertion part having one side thereof formed at another side of the main body part and inserted into the holes so as to support the light source module; and
a handle part formed at another side of the insertion part so as to be gripped by the hand when the magnetic part is attached to or detached from the metal lighting plate.

8. The light source module coupling structure according to claim 7,
the insertion part comprising:
insertion members having one side thereof integrally configured to extend from another side of the main body part, and inserted into the hole so as to support the light source module;
insertion protrusions formed on an outer surface of the insertion members to be regularly spaced apart from each other and inserted into an upper surface and lower surface of the hole so as to prevent the insertion members from escaping; and
an elastic groove formed between the insertion members so as to provide elasticity to the insertion members.

9. The light source module coupling structure according to claim 1,
the magnetic stators comprising:
a main body part;
a magnetic part formed at one side of the main body part and penetrating the holes so as to attach the main body part to the metal lighting plate by means of magnetic force;
an escape prevention part formed at another side of the main body part and suspending a perimeter of the holes so as to support the light source module;
a handle part formed at a lower portion of another side of the main body part so as to be gripped by the hand when the magnetic part is attached to or detached from the metal lighting plate;
a fixing part configured to protrude from an upper surface of the handle part so as to fix the main body part to the metal lighting plate; and
an elastic inversion part positioned between the magnetic part and the handle part so as to provide elasticity to the handle part or the fixing part.

10. The light source module coupling structure according to claim 9,
the main body part comprising:
a through hole for inserting the magnetic part, one side of the handle part, and the elastic inversion part;
a magnet fixing sill formed on an inner surface of the through hole so as to fix the magnetic part;
an inversion-part outer side stumbling sill for suspending an outer side the elastic inversion part; and
a handle stumbling sill for suspending one side of the handle part so as to prevent one side of the handle part from escaping outwardly.
